# EUROPEAN PATENT SPECIFICATION

(11) **EP 1 284 208 B1**
(45) Date of publication and mention of the grant of the patent: **15.10.2008**
(21) Application number: 02078344.5
(22) Date of filing: 12.08.2002
(51) Int. Cl.: B60G 11/10, B60G 7/02

(54) **Arrangement for attaching a bearing bracket of an axle assembly to a vehicle chassis**
Anordnung zum Befestigen eines Lagerbockes für eine Achseinheit an einem Fahrzeugrahmen
Dispositif de fixation pour un support de palier d'un ensemble-essieu au châssis du véhicule

(30) Priority: 16.08.2001 NL 1018772
(43) Date of publication of application: 19.02.2003
(73) Proprietor: WEWELER NEDERLAND B.V., 7332 AP Apeldoorn (NL)
(72) Inventor: Aalderink, Derk Geert, 7245 NV Laren (NL)
(74) Representative: Brookhuis, Hendrik Jan Arnold

(56) References cited:
- EP-A- 0 352 541
- EP-A- 0 615 869
- EP-A- 0 995 664

## Description

The invention relates to an arrangement for attaching a bearing bracket of an axle assembly to a chassis of a vehicle, which bearing bracket comprises two separate side plates, which each have an attachment region which is provided with holes through which bolts or rivets fit in order to attach the side plates to one another and to a chassis component of the vehicle, the attachment regions of the side plates being substantially parallel.

Numerous embodiments of a bearing bracket of this type are known. The arrangement whereby the bearing bracket is attached to the chassis has to be able to transmit moments which occur as a result of the driving and/or braking forces to the chassis. This requires a good connection which ensures that the bearing bracket does not start to rotate under the influence of the moments which occur.

By way of example, it is known in practice to attach the bearing bracket and the chassis component to one another under a clamping force by means of ten or more bolted or riveted connections, in order to prevent rotation of the bearing bracket. This is an undesirably large number of bolts or rivets. One alternative is to use fitted bolts or filling riveted connections. However, these connections have the drawback of being expensive.

It is an object of the invention to provide an arrangement for attaching a bearing bracket which overcomes the above drawbacks.

This object is achieved by an attachment arrangement according to the preamble, in which an attachment strip is arranged at the location of the attachment regions of the side plates, which attachment strip is directly fixed to the chassis component and has a region which is clamped between the attachment regions of the side plates.

The attachment strip provides two extra frictional surfaces in the clamping connection, with the result that rotation of the bearing bracket is prevented when a limited number of bolts or rivets are used. An additional advantage of the use of the attachment strip is that to attach the bearing bracket to the chassis component it is necessary to use bolts of a greater length, which is advantageous with regard to positioning of the bolts.

Preferred embodiments of the attachment arrangement according to the invention are defined in the subclaims.

The invention will be explained in more detail with reference to the drawing, in which:
Fig. 1 diagrammatically depicts a wheel axle suspension of an axle set of a vehicle;
Fig. 2 shows a bearing bracket which has been attached in accordance with the invention.

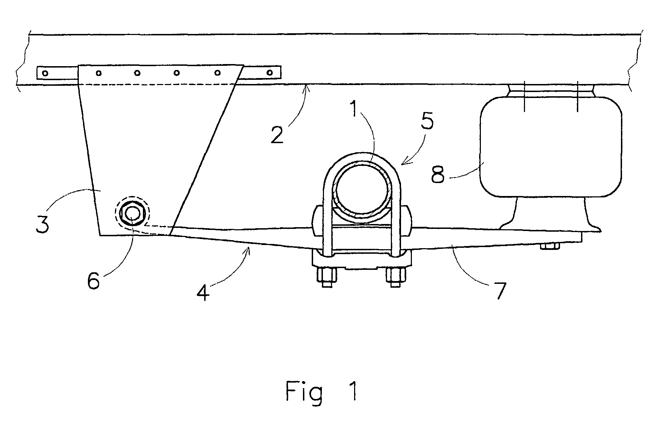

Fig. 1 diagrammatically depicts a wheel axle suspension of an axle set of a vehicle. The wheel axle is denoted by reference numeral 1. The wheel axle 1, at both ends of which one or more wheels are arranged, is shown as a round, hollow axle, but may also be an axle with a cross section which is square or in some other form.

The wheel axle suspension comprises a bearing bracket 3, which is attached to a chassis component, in this example a chassis beam 2, and a supporting arm 4 for the wheel axle 1, which is pivotably attached to the bearing bracket 3. The supporting arm 4 extends in the longitudinal direction of the vehicle. The wheel axle 1 is attached to the supporting arm 4 in a known way by a clamp 5.

The supporting arm 4 is attached to the bearing bracket 3 by an attachment bolt 6. In the embodiment shown, an end section 7 of the supporting arm 4 extends beyond the wheel axle 1. A gas spring 8 is arranged between the end section 7 and the chassis beam 2.

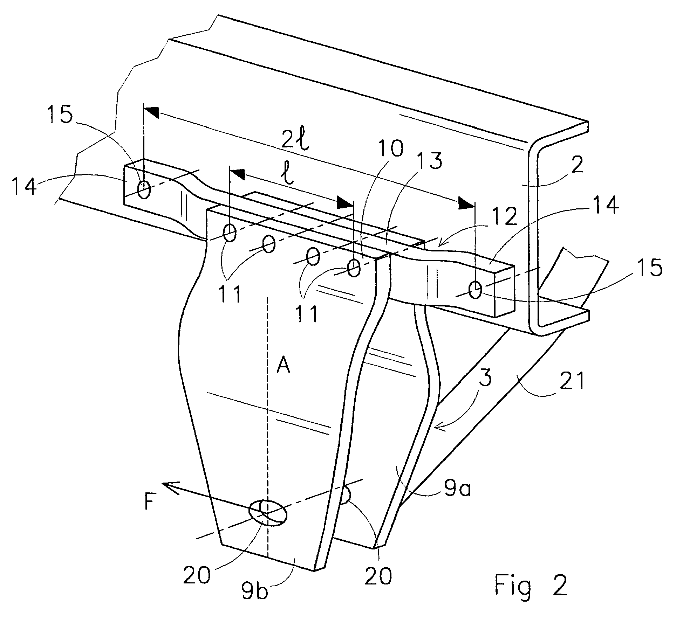

Fig. 2 shows the attachment arrangement for a bearing bracket 3 according to the invention. The bearing bracket 3 has two side plates 9a and 9b. The side plates 9a and 9b have an attachment region 10. In the attachment region 10 there are holes 11 for attaching the bearing bracket 3 to the chassis beam 2 by means of, for example, a bolted connection. By way of example, it is also possible to use a riveted connection for the attachment arrangement.

In the vicinity of the free end, the bearing bracket 3 is provided with holes 20 through which the attachment bolt 6 of the supporting arm 4 is fitted. At the holes 20, the bearing bracket 3 is subjected to load from driving or braking forces originating from the wheel axle 1. Fig. 2 shows, by way of example, a force using an arrow which is denoted by F. The fact that the force F engages on the chassis beam 2 at a distance A from the attachment arrangement for the bearing bracket 3 means that the attachment of the bearing bracket and the chassis beam 2 is subjected to load by a moment of FxA. This moment has to be transmitted to the chassis beam 2 in order to prevent rotation of the bearing bracket 3. To absorb any transverse forces acting on the bearing bracket 3, it is possible to fit a strut 21 which supports the side plate 9a in the transverse direction in the vicinity of the free end.

An attachment strip 12 is arranged between the attachment regions 10 of the two side plates 9a and 9b, in the following way. The first side plate 9a bears against the chassis beam 2 by means of that side of the attachment region 10 which faces towards the chassis beam 2. One side of a centre region 13 of the attachment strip 12 is arranged against the other side of the attachment region 10. The attachment region 10 of the second side plate 9b is arranged against the other side of the centre region 13 of the attachment strip 12. Holes (not shown) for the bolted or riveted connections by which the assembly of side plates 9a, 9b and attachment strip 12 is attached to the chassis beam 2 are provided in the centre region 13.

The attachment strip has end regions 14. These end regions 14 are offset with respect to the centre region 13, in such a manner that the end regions 14 bear against the chassis beam 2 by means of that side which faces towards the chassis beam 2, while that side of the centre region 13 which faces towards the chassis beam 2 lies at a distance from the chassis beam 2 which is such that the attachment region 10 of the side plate 9a fits tightly between the centre region 13 and the chassis beam 2. The end regions 14 of the attachment strip 12 are connected to the chassis beam 2. In the example shown in Fig. 2, there are holes 15 in the end regions 14, for a bolted connection or a riveted connection.

The overall length of the attachment strip 12 is preferably as long as possible, since it is then possible to absorb a higher moment. The overall length of the attachment strip 12 which can be used is, of course, dependent on the attachment space available. The overall length of the attachment strip 12 is preferably approximately twice the width of the attachment region 10 of the side plates 9a, 9b, in other words the length of the end regions 14 together approximately corresponds to the length of the centre region 13. In Fig. 2, the length of the attachment region is denoted by L and the length of the strip by 2L. In theory, in this exemplary embodiment, approximately a third of the moment which is exerted on the bearing bracket 3 is absorbed by the bearing bracket 3 itself, i.e. by the attachment regions 10 of the side plates 9a, 9b. The other approximately two thirds of the moment is absorbed by the attachment strip 12.

In an alternative which is not shown, the attachment strip has one end region which projects above the side plates at the top.

## Claims

1. Arrangement for attaching a bearing bracket (3) of an axle assembly to a chassis of a vehicle, which bearing bracket (3) comprises two separate side plates (9a, 9b), which each have an attachment region (10) which is provided with holes (11) through which bolts or rivets fit in order to attach the side plates (9a, 9b) to one another and to a chassis component of the vehicle, the attachment regions (10) of the side plates (9a, 9b) being substantially parallel, **characterized in that** an attachment strip (12) is arranged at the location of the attachment regions (10) of the side plates (9a, 9b), which attachment strip (12) is directly fixed to the chassis component and has a region (13) which is clamped between the attachment regions (10) of the side plates (9a, 9b).

2. Attachment arrangement according to claim 1, in which the attachment strip (12) has recesses which correspond to the holes (11) in the side plates (9a, 9b).

3. Attachment arrangement according to claim 1 or 2, in which the attachment strip (12) has one or more end regions (14) which project beyond the side plates (9a, 9b) and are connected to a chassis component.

4. Attachment arrangement according to claim 3, in which the attachment strip (12) is shaped in such a manner that the end regions (14), in the mounted state, bear against the chassis component.

5. Attachment arrangement according to claim 3 or 4, in which the end regions (14) of the attachment strip (12) are provided with holes (15) and the strip (12) is connected to the chassis component via a bolt or riveted connection.

6. Attachment arrangement according to one of claims 3-5, in which the end regions (14) project beyond the side plates (9a, 9b) at the side and the length of the respective end regions (14) amounts to approximately half the length of the centre region (13).

## Patentansprüche

1. Anordnung zum Befestigen eines Lagerbockes (3) für eine Achseinheit an einem Rahmen eines Fahrzeuges, wobei der Lagerbock (3) zwei einzelne Seitenplatten (9a, 9b) umfasst, wobei jede einen Befestigungsbereich (10) hat, der mit Löchern (11) versehen ist, durch welche Bolzen oder Nieten passen, um die Seitenplatten (9a, 9b) aneinander und an einem Rahmenbauteil des Fahrzeuges zu befestigen, wobei die Befestigungsbereiche (10) der Seitenplatten (9a, 9b) im Wesentlichen parallel sind, **dadurch gekennzeichnet, dass** eine Befestigungsleiste (12) an der Stelle der Befestigungsbereiche (10) der Seitenplatten (9a, 9b) angeordnet ist, wobei die Befestigungsleiste (12) unmittelbar an dem Rahmenbauteil fixiert ist und einen Bereich (13) hat, der zwischen den Befestigungsbereichen (10) der Seitenplatten (9a, 9b) eingeklemmt ist.

2. Befestigungsanordnung gemäß Anspruch 1, bei der die Befestigungsleiste (12) Aussparungen hat, welche mit den Löchern (11) in den Seitenplatten (9a, 9b) übereinstimmen.

3. Befestigungsanordnung gemäß Anspruch 1 oder 2, bei der die Befestigungsleiste (12) einen oder mehrere Endbereiche (14) hat, welche über die Seitenplatten (9a, 9b) hinausragen und mit einem Rahmenbauteil verbunden sind.

4. Befestigungsanordnung gemäß Anspruch 3, bei der die Befestigungsleiste (12) derart geformt ist, dass die Endbereiche (14) in montiertem Zustand gegen das Rahmenbauteil anliegen.

5. Befestigungsanordnung gemäß Anspruch 3 oder 4, bei der die Endbereiche (14) der Befestigungsleiste (12) mit Löchern (15) versehen sind und die Leiste (12) mit dem Rahmenbauteil durch einen Bolzen oder eine genietete Verbindung verbunden ist.

6. Befestigungsanordnung gemäß einem der Ansprüche 3 - 5, bei der die Endbereiche (14) über die Seitenplatten (9a, 9b) zur Seite hinausragen und die Länge der jeweiligen Endbereiche (14) ungefähr die halbe Länge des Zentralbereiches (13) beträgt.

## Revendications

1. Dispositif de fixation d'un support de palier (3) d'un ensemble essieu à un châssis d'un véhicule, lequel support de palier (3) comprend deux plaques latérales séparées (9a, 9b), chacune d'elles ayant une région de fixation (10) percée de trous (11) à travers lesquels des boulons ou des rivets sont ajustés afin de fixer les plaques latérales (9a, 9b) les unes aux autres et à un composant de châssis du véhicule, les régions de fixation (10) des plaques latérales (9a, 9b) étant sensiblement parallèles, **caractérisé en ce qu'**une bande de fixation (12) est disposée à l'emplacement des régions de fixation (10) des plaques latérales (9a, 9b), laquelle bande de fixation (12) est directement fixée au composant de châssis et présente une région (13) qui est serrée entre les régions de fixation (10) des plaques latérales (9a, 9b).

2. Dispositif de fixation selon la revendication 1, dans lequel la bande de fixation (12) présente des renfoncements qui correspondent aux trous (11) situés dans les plaques latérales (9a, 9b).

3. Dispositif de fixation selon la revendication 1 ou 2, dans lequel la bande de fixation (12) présente une ou plusieurs régions d'extrémité (14) qui font saillie au-delà des plaques latérales (9a, 9b) et sont reliées à un composant de châssis.

4. Dispositif de fixation selon la revendication 3, dans lequel la bande de fixation (12) présente une forme telle que les régions d'extrémité (14), dans l'état monté, portent contre le composant de châssis.

5. Dispositif de fixation selon la revendication 3 ou 4, dans lequel les régions d'extrémité (14) de la bande de fixation (12) sont percées de trous (15) et la bande (12) est reliée au composant de châssis par l'intermédiaire d'un boulon ou d'un raccordement riveté.

6. Dispositif de fixation selon l'une quelconque des revendications 3 à 5, dans lequel les régions d'extrémité (14) font saillie au-delà des plaques latérales (9a, 9b) sur le côté et la longueur des régions d'extrémité respectives (14) approximativement à la moitié de la longueur de la région centrale (13).
